(19) **Europäisches Patentamt**
**European Patent Office**
**Office européen des brevets**

(11) Publication number: **0 323 178 A2**

# (12) EUROPEAN PATENT APPLICATION

(21) Application number: **88312277.2**

(22) Date of filing: **23.12.88**

(51) Int. Cl.⁴: **C01G 3/00 , H01L 39/00**

(30) Priority: **29.12.87 NZ 222691**

(43) Date of publication of application:
**05.07.89 Bulletin 89/27**

(84) Designated Contracting States:
**DE FR GB IT NL SE**

(71) Applicant: **HER MAJESTY THE QUEEN IN RIGHT OF NEW ZEALAND**
**Department of Scientific and Industrial Research Physics and Engineering Laboratory Gracefield Road**
**Lower Hutt(NZ)**

(72) Inventor: **Tallon, Jeffery Lewis**
**3 Marine Drive**
**York Bay Eastbourne(NZ)**
Inventor: **Tooke, Donald Mark**
**19 Matai Street**
**Lower Hutt(NZ)**

(74) Representative: **Read, Matthew Charles et al**
**Venner Shipley & Co. 368 City Road**
**London EC1V 2QA(GB)**

(54) **Methods for producing high temperature superconducting materials.**

(57) A method of preparing a binary, ternary or higher metal oxide material containing as one or more cations any alkali-earth element(s) and exhibiting superconductivity, comprising preparing said material such that said alkali earth element(s) is substituted by any of the alkali metals Li, Na, K, Rb or Cs to an extent sufficient to achieve a rate of oxygen diffusion or rate of oxygen exchange with an oxygen containing atmosphere sufficient to enable oxygen exchange or oxygen diffusion into said material to achieve the oxygen stoichiometry in said material requisite for superconductivity at an elevated temperature in a minimum or reduced time, and carrying out said oxygen exchange or oxygen diffusion into said material to achieve said oxygen stoichiometry in a minimum or reduced time.

EP 0 323 178 A2

The invention relates to methods for preparing binary, ternary or higher metal oxide materials having high or enhanced oxygen-ion mobility or diffusion, or, for a given density and material dimensions, having a high or enhanced rate of oxygen exchange or diffusion with an ambient oxygen containing atmosphere; to methods for preparing novel binary, ternary, or higher metal oxide materials exhibiting superconductivity; and to novel materials having high or enhanced oxygen-ion mobility and/or exhibiting superconductivity.

Binary, ternary and higher metal oxide materials containing as one or more cations an alkali earth element or element and which exhibit superconductivity or which may be prepared to exhibit superconductivity at elevated temperatures are exemplified by $YBa_2Cu_3O_{7-\delta}$, $Bi_{2+x}(Ca,Sr)_{n+1}Cu_nO_{2n+4+\delta}$, $Tl_{1+n}(Ca,Ba)_{n+1}Cu_nO_{2n+3+\delta}$ and $Tl_{2+n}(Ca,Sr)_{n+1}Cu_nO_{2n+4+\delta}$.

It is known that the material $YBa_2Cu_3O_{7-\delta}$, conveniently referred to as YBCO, or those materials $RBa_2Cu_3O_{7-\delta}$, conveniently referred to as RBCO, where the element Y in YBCO is replaced either wholly or in part by an element of the rare-earth lanthanides, can be prepared in a form which is superconducting at elevated temperatures in the region of 90 to 100 K. In addition, it is known that the homologous series of compounds approximated in composition by the formula $Bi_{2+x}(Ca,Sr)_{n+1}Cu_nO_{2n+4+\delta}$, where n may be 1, 2, 3, ...., conveniently referred to as BCSCO, form a series of superconducting compounds with a superconducting transition temperature $T_c \leq 76$ K for $n=1$, $T_c \leq 91$ K for $n=2$ and $T_c \leq 109$ K for $n=3$. In addition, it is known that the homologous series of compounds approximated in composition by the formula $Tl_{1+n}(Ca,Ba)_{n+1}Cu_nO_{2n+2+\delta}$ and $Tl_{2+n}(Ca,Sr)_{n+1}Cu_nO_{2n+4+\delta}$ where n may equal 1, 2, 3, 4, ...., conveniently referred to as TCBCO similarly form a series of superconducting compounds. These materials are loosely referred to as "high-temperature superconductors". In their superconducting state these materials will exhibit zero electrical resistance and perfect diamagnetism. The latter property means that the material will totally expell a magnetic field, a phenomenon known as the Meissner effect.

Typically, the above materials may be prepared by solid state reaction of precursor materials, for example, such as $Y_2O_3$, $BaCO_3$ and $CuO$ for YBCO, such as $Bi_2O_3$, $CaCO_3$, $SrCO_3$ and $CuO$ for BCSCO, and such as $Tl_2O_3$, $CaO$, $BaO$ and $CuO$ for TCBCO, followed by oxygen loading or unloading as appropriate to achieve the optimum oxygen stoichiometry for superconductivity, as described in "Chemistry of High Temperature Superconductors" - Eds. D L Nelson, M S Whittingham and T F George, American Chemical Society Symposium Series 351 (1987); Buckley et al, Physica C156, 629(1988); and Torardi et al Science 240, 631 (1988), for example.

In order to achieve maximum strength and toughness for the materials, it is important that they are prepared to a density close to the theoretical density and ideally to a density greater than 98% of the theoretical density for the material. As prepared by common solid-state reaction and sintering techniques, densities of about 80% theoretical density can readily be achieved but the residual porosity substantially reduces strength and toughness.

Higher densities may be achieved by, for example, spray drying or freeze drying powders as described for example in Johnson et al, Advanced Ceramic Materials 2, 337 (1987), spray pyrolysis as described for example in Kodas et al, Applied Physics Letters 52, 1622 (1988), precipitation or sol gel methods as described for example in Barboux et al J. Applied Physics 63, 2725 (1988), in order to achieve very fine particles of dimension 20 to 100 mm. After die-pressing these will sinter to high density. Alternatively, to achieve higher densities one may hot press, extrude, or rapidly solidify the ceramic material from the melt after solid state reaction or grow single crystals.

The implementation of these materials as superconductors is seriously thwarted by a number of difficulties including the tendency of material prepared to a high density to crack on cooling after reaction and sintering in preparation of the material, and the difficulty, on a practical time scale, of loading oxygen into the high density material to achieve the correct oxygen stoichiometry for optimised superconductivity.

The occurrence of cracking is exemplified, and is particularly serious, in the case of YBCO. At the typical temperatures of preparation and processing (900-950 °C) this material is tetragonal and is oxygen deficient. In the chemical formula $RBa_2Cu_3O_{7-\delta}$, $\delta$ may be about 0.8 when prepared in air. On slow cooling, oxygen is absorbed, decreases and the material will pass to an orthorhombic structure at about 640 °C in air where the volume thermal expansion coefficient roughly doubles (see Tallon, Schnitema and Tapp, Applied Physics Letters 52, 507 (1988)). On further slow cooling, the material continues to load up with oxygen with the b-axis direction expanding while the a-axis and c-axis directions contract. At about 400 °C where oxygen loading is more or less complete, the volume thermal expansion coefficient roughly halves and the a-, b- and c-directions all contract on further cooling. It is these large, strongly anisotropic, thermal expansion anomalies which are the cause of cracking, particularly in dense samples where the interior is unable to load up with oxygen sufficiently rapidly resulting in marked expansion or contraction differentials occurring over the sample cross-section.

It is difficult to load oxygen into materials prepared to a high density because of the low diffusion rate. The self diffusion coefficient for oxygen in YBCO has been measured to be 2.9 x $10^{-11}$ cm$^2$/sec at a temperature of 800 K (see Tallon et al, Applied Physics Letters 52, 507 (1988)). Therefore for a 1 mm thick 100% dense sample, it would take as much as 500 days for oxygen equilibration to take place. This problem is particularly marked in the case of single crystalline material. In BCSCO the oxygen hopping rate and thence the oxygen diffusion coefficient has been measured to be about 100 times slower still than in YBCO, thus rendering the preparation of high density superconducting BCSCO materials an even greater problem. Oxygen diffusion coefficients in TCBCO may be expected to be similar to those in BCSCO.

Nonetheless, oxygen loading or unloading is essential to optimising the superconducting properties. For RBCO if $\delta > 0.6$ superconductivity does not occur. If $0.2 < \delta < 0.6$ the superconducting transition temperature $T_c$ is about 60 K and only for $\delta < 0.2$ does $T_c \sim 90$ K. For BCSCO annealed in a fixed oxygen partial pressure $T_c$ passes through a maximum as a function of anneal temperature, and hence of oxygen content. Maximum $T_c$ for n = 2 BCSCO requires oxygen unloading by annealing at 740°C in 2% oxygen while for n = 3 BCSCO oxygen loading by annealing at 300-400°C in air maximises $T_c$ (see Buckley et al, Physica C156, 629 (1988)).

Known techniques, such as those described in the prior references, for preparation of RBCO high temperature superconductors having the requisite oxygen stoichiometry for superconductivity at 90 K involve at least one heating of the precursor materials to react for periods of 6 to 15 hours at temperatures typically in the range 930°C to 970°C, followed by slow cooling in an oxygen containing atmosphere at an appropriate oxygen partial pressure, as referred to. Cooling for extended times in the range 4 to 15 hours is required for typical densities of 70 to 85%. The slow cooling allows oxygen to progressively load into the material causing to decrease preferably to close to zero. The rate at which oxygen loads depends, amongst other things, on the density (or porosity) and the material dimensions, the rate decreasing as the density or dimensions increases. A typical example in prior references required a 3 day anneal in oxygen at 400°C for a dense sample (>96%) of thickness 0.3 mm.

Preparation of BCSCO n = 2 having the requisite stoichiometry for superconductivity at 91 K requires heating precursor materials at 850°C for 6 to 15 hours followed by annealing at 740°C in 2% oxygen for 2 hours followed by rapid quenching. Preparation of BCSCO n = 1 and n = 3 having the requisite oxygen stoichiometry for superconductivity at 76 K and 107 K respectively requires reaction heating followed by slow cooling and annealing at 500°C and 400°C respectively in air for times of the order of 6 to 15 hours for 85% dense material. Annealing times for optimising TCBCO of similar density are expected to be very similar. For RBCO, BCSCO and TCBCO the alkali-earth atoms are typically introduced in the precursor materials as carbonates which tend to be slow reacting.

In summary, the low rate of oxygen mobility in these known high temperature superconducting materials, giving slow oxygen exchange or diffusion into the materials, substantially inhibits their preparation to relatively high densities and/or in relatively rapid preparation times.

Binary, ternary or higher metal oxide materials containing as cations one or more alkali earth elements, such as those referred to previously, and having high oxygen-ion mobility may also be used as electrodes, electrolytes and sensors for electrochemical applications. The oxygen-ions will move through such an electrolyte material under an applied electrical field allowing the construction of oxygen pumps for catalysis and other oxidising or reduction processes involving the supply or extraction of atomic oxygen. The oxygen-ions will also move through such an electrolyte material under a concentration gradient allowing the construction of batteries, fuel cells and oxygen monitors. For these materials to act effectively as electrolytes in such applications it is necessary that they have high oxygen-ion mobility through the atomic structure of the materials and at the same time have a low electronic conductivity so that the dominant current flow is by oxygen-ions and not electrons. For these materials to act effectively as electrodes in such applications it is necessary that they have a high electronic conductivity as well as a high oxygen-ion mobility so that electrons which are the current carried in the external circuit may couple to oxygen-ions which are the current carrier in the internal circuit.

The present invention provides methods for preparing metal oxide materials, and new metal oxide materials, of the type referred to and useful as superconductors or electrodes, electrolytes, sensors, catalysts or the like, having high or enhanced oxygen mobility. The methods of the invention enable the preparation of high temperature superconducting materials to high densities and/or in reduced preparation of times. The methods of the invention can be utilised to prepare electrodes, electrolytes, sensors, catalysts and the like having high oxygen mobility.

In broad terms the invention may be said to comprise in one aspect a method of enhancing oxygen-ion mobility in a binary, ternary, or higher metal oxide containing as one or more cations any alkali-earth element or elements, comprising preparing said material such that said alkali-earth element(s) is partially or fully substituted by any of the alkali metals Li, Na, K, Rb or Cs.

In another aspect the invention may be said to comprise a method of preparing a binary, ternary, or higher metal oxide material containing as one or more cations any alkali-earth element or elements and exhibiting superconductivity comprising preparing said material such that said alkali-earth element(s) is partially or fully substituted by any of the alkali metals Li, Na, K, Rb or Cs.

In another aspect the invention may be said to comprise a method of preparing a binary, ternary, or higher metal oxide material containing as one or more cations any alkali earth element or elements and exhibiting superconductivity comprising preparing said material such that said alkali earth element is partially or fully substituted by any of the alkali metals Li, Na, K, Rb, or Cs, and modifying the oxygen stoichiometry of said material to enhance the superconductivity thereof.

In another aspect the invention may be said to comprise a method of preparing a binary, ternary or higher metal oxide material containing as one ore more cations any alkali-earth element(s) and exhibiting superconductivity, comprising preparing said materials such that said alkali earth element(s) is substituted by any of the alkali metals Li, Na, K, Rb or Cs to an extent sufficient to achieve a rate of oxygen diffusion or rate of oxygen exchange with an oxygen containing atmosphere sufficient to enable oxygen exchange or oxygen diffusion into said material to achieve the oxygen stoichiometry in said material requisite for superconductivity at an elevated temperature in a minimum or reduced time, and carrying out said oxygen exchange or oxygen diffusion into said material to achieve said oxygen stoichiometry in a minimum or reduced time.

In another aspect the invention may be said to comprise a method of preparing an electrode, electrolyte, sensor or catalyst comprising preparing said binary, ternary, or higher electrode, electrolyte, sensor or catalyst from metal oxide material containing as one or more cations any alkali earth element or elements having high oxygen-ion mobility, including preparing said material such that said alkali earth element is partially or fully substituted by any of the alkali metals Li, Na, K, Rb, or Ca.

Preferably the alkali earth element containing materials which are alkali metal substituted in the preparation of high temperature superconductors or of materials useful as electrodes, electrolytes, sensors, catalysts or the like are selected from:

$RBa_2Cu_3O_{7-\delta}$ ... (1)

wherein: R is Y, La, Nd, Sm, Eu, Gd, Ho, Er, Lu, Bi or Tl, or any combination thereof,

$Bi_{2+x}(Ca,Sr)_{n+1}Cu_nO_{2n+4+\delta}$ ... (2)

wherein n = 0, 1, 2, 3, ...;

$Tl_{1+x}(Ca,Ba)_{n+1}Cu_nO_{2n+3+\delta}$ ... (3)

wherein n = 0, 1, 2, 3, ...;

$Tl_{2+x}(Ca,Ba)_{n+1}Cu_nO_{2n+4+\delta}$ ... (4)

wherein n = 0, 1, 2, 3, ...; and

$Pb_2Sr_2RCu_3O_{8+\delta}$; ... (5)

where in formulas (2), (3) and (4):

Bi or Tl may be partially substituted by Tl, Bi, Pb, Sb or R where R is as defined in formula (1);

and where in formulas (1), (2), (3), (4) and (5):

the alkali earth elements may be replaced either wholly or in part by another alkali earth element, R, Pb or Sb;

Cu may be partially substituted by any transition metal, and

O may be partially substituted by H, F, N or S

and where in formula (5):

R may be replaced, either wholly or in part by any other element R as defined in (1) or any alkali earth element.

The foregoing formulae (1) - (5) are given as examples rather than intended to be limiting. Derivatives of these materials are for example possible, where the atomic elements in the formulae are partially substituted by other elements.

Preferably the alkali metal which is substituted into these materials is K or Na.

Other preferred alkali earth containing materials which may alkali metal substituted in the preparation of materials in accordance with the invention suitable for use as electrodes, electrolytes, sensors, catalysts or the like may be selected from:

$Bi_2AO_{4+\delta}$ ... (7)

wherein:

Bi is replaceable either wholly or in part by Tl, Pb or Sb;

$AR_{1-x}R'_xO_{3-\delta}$ ... (8)

wherein:

4

R′ is any other element R as defined in formula (1);

$A_{12}Al_{14}O_{33}$; or    ... (9)

$RA_2Ni_3O_{7-\delta}$;    ... (10)

wherein: in formulae (7), (8), (9) and (10):

A is any alkali earth element or combination thereof.

Preferred examples of materials which may be alkali metal substituted to form electrodes, electrolytes, sensors, catalysts and the like are

$Bi_2Sr_{1-x}Ca_xO_{4+\delta}$ ;

$SrCe_{1-x}Yb_xO_{3-\delta}$ ;

$Ca_{12}Al_{14}O_{33}$ ; or

$YBa_2Ni_3O_{7-\delta}$ .

A preferred alkali substituted mateial formed as a superconductor or as an electrode, electrolyte, sensor, catalyst or the like in accordance with the invention is:

$YBa_{2-x}X_xCu_3O_{7-\delta}$

wherein O<x<1 and X is Na or K.

The alkali metal substituted, metal oxide materials of the invention may be prepared by solid state reaction, liquid flux reaction, or vapour phase deposition reaction techniques as are known for preparation of the known unsubstituted RBCO, TCBCO and BCSCO materials, for example. The preparation of unsubstituted alkali earth containing binary, ternary and higher metal oxide materials by these techniques is described in "Chemistry of High-Temperature Superconductors" - Eds. D L Nelson, M S Whittingham and T F George, American Chemical Society Symposium Series 351 (1987)) and in Buckley et al, Physica C 156, 629 (1988).

The alkali metals substituted into the subject materials are suitably introduced in preparation in the form of their oxides, but the preparation of the materials of the invention by the above techniques is complicated by the high temperatures and the long reaction and sintering times which are typically required. The volatility of the alkali oxides at such temperatures is sufficient for substantial loss of the alkali over the long reaction and processing times. Out-diffusion and evaporation of the alkali metals from the metal oxide or its precursor during preparation under elevated temperatures may be prevented or controlled by controlling the ambient atmosphere including controlling the oxygen partial pressure and the alkali oxide partial pressure; by controlling the ambient temperatures; by enclosing the metal oxide or its precursor(s) in a sealed container; by providing excess precursor alkali to allow for loss; or by controlling the chemical potential of the alkali atoms in the metal oxide by electrochemical means.

Preparation of the materials of the invention/in accordance with the method of the invention may be carried out more rapidly if in preparation of the materials by solid state reaction of precursor materials any or all of the cations in the end material are introduced as precursors in the nitrate or hydroxide forms for rapid reaction of bulk material in the nitrate or hydroxide melt. In the preparation of $YBa_2KO_{7-\delta}$ for example by solid state reaction the precursor materials employed may be $Y_2O_3$, $Ba(NO_3)_2$, $KNO_3$ and CuO. In the preparation of $Bi_{2+x}(Ca, Sr)_{n+1}Cu_nO_{2n+4+\delta}$ with Ca or Sr substituted by Na or K, for example, the precursor materials employed may be $Bi_2O_3$, $Ca(NO_3)_2$, $Sr(NO_3)_2$, CuO, and $NaNO_3$ or $KNO_3$. The alkali metals may alternatively be introduced as KOH or NOH for example. Both the temperature and duration of the preparation reaction may be lowered by using nitrate or hydroxide precursors to introduce the cations. Melting of the nitrate and/or hydroxide precursors allows intimate atomic mixing prior to decomposition and efflux of oxides of nitrogen.

After preparation the materials may be sintered or (re-)ground to small particles and pressed to shape and sintered as desired to form the end material for use, as is known in the art for the preparation of unsubstituted materials, and/or annealed to relieve stresses and increase strength and toughness as is similarly known in the art for the unsubstituted materials.

The precursor materials may be stoichiometrically mixed as nitrates in aqueous or other suitable solution and sprayed as a mist which is passed through an oven, furnace, microwave heating zone or the like for rapid reaction of the discrete droplets. The droplets may then be collected by way of a cyclone, filter, electrostatic precipitator, or the like.

The alkali metal substituted, metal oxide materials of the invention may alternatively be prepared by firstly preparing the alkali earth element containing parent materials by known techniques such as those referred to and then substituting the alkali metals by electrochemical insertion, ion insertion, or diffusion from a bulk source. The substituted materials may also be grown from a flux onto a substrate through which alkali-ions are pumped by electrochemical means.

The alkali substituted materials after preparation may as necessary be loaded or unloaded with oxygen to achieve the optimum stoichiometry for superconductivity, optimised oxygen mobility, or other material properties. As stated, for RBCO materials for example this generally requires oxygen loading into the materials and with known techniques this is generally carried out by slow cooling the materials from the reaction temperatures, which are typically in the range 930 - 970 °C, over 4 to 15 hours. Alkali substituted RBCO materials formed in accordance with the invention will typically only require a matter of minutes or even seconds for oxygen loading to occur, for materials of comparable density. Oxygen loading or unloading may be carried out by heating to comparable temperatures as used in oxygen loading/unloading of the unsubstituted materials as described in the prior references, followed by cooling over a time sufficient to achieve the required oxygen stoichiometry, which will typically be in the range of seconds to up to ten minutes (depending on sample density and dimensions). Most suitably, oxygen loading or unloading is carried out during cooling from the reaction temperatures immediately after the preparation reaction, where the materials are prepared by solid state reaction for example. Alternatively and/or additionally oxygen loading may be carried out during sintering or annealling in an oxygen containing atmosphere at an appropriate pressure or partial pressure of oxygen. Where the materials are prepared by spraying an aqueous solution of the precursor materials as a mist through a heated reaction zone, the reacted particles may be rapidly oxygen loaded or unloaded by a short anneal in an oxygen containing atmosphere while still airborne, or after collection.

The materials may be used as prepared without necessarily requiring oxygen loading or unloading for forming electrodes, electrolytes, sensors, catalysts and the like utilising the high oxygen mobility property of the materials.

The alkali metals incorporated into the atomic structure of materials formed in accordance with the invention may be any of the alkali metals Li, Na K, Rb or Cs. Na and K are preferred. Na may for a given degree of substitution give higher oxygen loading rates, and has other advantages including lower volatility of the alkali at typical temperatures of preparation, greater resistance to atmospheric and moisture corrosion, and better sintering for a given temperature and duration of sinter, offering higher densification.

Materials formed with the method of the invention may be prepared in the form of thin films, thick films, filiaments, tapes, bulk ceramics or single crystals, for example.

As stated, substitution with alkali metals in RBCO, BCSCO and TCBCO and their substitutional derivatives or other metal oxide materials of the type described results in enhanced oxygen mobility or diffusion in the material. The materials may be loaded or unloaded with oxygen more rapidly as described and/or higher density versions of the materials may be prepared relative to the unsubstituted materials for similar if not reduced temperatures and durations of sintering. In addition, the superconducting orthorhombic structure is more readily achieved for RBCO prepared with the method of the invention and less oxygen may be required in the material for orthorhombic structure and superconducting behaviour, and the orthorhombic to tetragonal transition in RBCO where anisotropic thermal expansion is largest is displaced to a higher temperature where oxygen mobility is greater. Higher densities may be achieved.

Materials formed in accordance with the invention may have included in their atomic structure oxygen, hydrogen, fluorine or alkali-ions by electrochemical means. An oxygen-ion, proton, fluorine-ion or alkali-ion solid state electrolyte may be used for pumping the require ionic species into the materials. For example, RBCO may be used as an electrode material or may embed an electrode which is separated from a counter electrode by the solid-state electrolyte. The application of a voltage between the two electrodes will insert the required ions in the RBCO or RBCO-derived material. This will be carried out at elevated temperature and ideally, though not exclusively, the substituted material would be annealed after insertion.

Preferred examples, without loss of generality, of alkali-substituted high-$T_c$ superconductors formed in accordance with the invention are $YBa_{2-x}K_xCu_3O_{7-\delta}$ where $0.0 < x < 1$, and $YBa_{2-x}Na_xCu_3O_{7-\delta}$ where $0 < x < 0.5$.

The invention is further described with reference to the following examples which further illustrate the preparation of materials in accordance with the method of the invention. In the drawings which are referred to in the examples:

Fig. 1 shows a plot of the boundaries between the tetragonal (T) and two orthorhombic phases ($O_i$ and $O_{ii}$) of $YBa_{2-x}K_xCu_3O_{7-\delta}$ of Example 1 as a function of the composition parameter x as determined from x-ray diffraction of samples air-quenched (dashed lines) and quenched into liquid nitrogen (solid lines). $O_i$ is the 90 K superconducting orthorhombic phase ($c/3 = b>a$), $O_{ii}$ is the 60 K superconducting orthorhombic phase ($c/3>b>a$) and T is the non-superconducting tetragonal phase ($c/3>b=a$). Here a, b and c are the structural lattice constants.

Fig. 2 shows the oxygen stoichiometry ($7-\delta$) for (a) unsubstituted samples and (b) K- substituted samples ($x = 0.08$) of Example 1. Solid symbols refer to air quenching and open symbols refer to liquid nitrogen quenching.

Fig. 3 shows the absolute oxygen stoichiometry as a function of temperature for three different substitution levels: x = 0.00, 0.05 and 0.10. The data for x = 0.15 more or less reproduces that for x = 0.10 while the data for x = 0.20 reproduces that for x = 0.05.

Fig. 4 shows a plot of the increase in mass as a function of time due to oxygen loading in $YBa_{2-x}K_xCu_3O_{7-\delta}$ for three different values of x, each sample having the same density of about 87%. Samples were equilibrated in oxygen at a given temperature then the temperature was rapidly dropped by 50 to 100°C and the transient recorded. x = 0: 722°C to 613°C; x = 0.04: 676°C to 619°C; x = 0.01: 676°C to 621°C.

Fig. 5 shows a plot similar to Fig. 4 with the following temperature drops x = 0: 613°C to 501°C; x = 0.04: 567°C to 513°C; x = 0.01: 563°C to 505°C.

Fig. 6 shows a plot of the transient mass change and the transient oven temperature change for the x = 0.1 sample shown in Fig. 4.

Fig. 7 shows a plot of the transient mass change and oven temperature change for the x = 0.1 sample shown in Fig. 5.

Fig. 8 shows the equilibrium oxygen stoichiometry at the end of each transient for three values of x in $YBa_{2-x}K_xCu_3O_{7-\delta}$.

Fig. 9 shows the time elapsed for (e-l)/e i.e. 0.63 of the total oxygen loading to take place in pure oxygen. The data is shown as a function of temperature and x in $YBa_{2-x}K_xCu_3O_{7-\delta}$.

Fig. 10 shows same as in Fig. 9 for $YBa_{2-x}K_xCu_3O_7$– in air. Solid symbols are for $YBa_{1.9}Na_{0.1}Cu_3O_{7-\delta}$ in air.

Fig. 11 shows same as in Fig. 9 in 1% oxygen.

Fig. 12 shows the mechanical damping $Q^{-1}$ as a function of temperature. Solid symbols: $YBa_2Cu_3O_{7-\delta}$ in air, open symbols $YBa_{1.9}Na_{0.1}Cu_3O_{7-\delta}$ (triangles: air; circles: 2% oxygen: diamonds: vacuum heating; squares: vacuum cooling).

Fig. 13 is a graph of the imaginary components $M''$ and $Z''$ of the modulus and impedance plotted against the logarithm of the frequency for $Bi_2S_{0.9}Na_{0.1}O_4$ at 522°C showing the low- and mid-frequency relaxation peaks.

Fig. 14 is a graph of the imaginary components $M''$ and $Z''$ of the modulus and impedance plotted against the logarithm of the frequency for $Bi_2Sr_{0.9}Na_{0.1}O_4$ at 250°C showing the mid- and high-frequency relaxation peaks.

Fig. 15 is a graph of the equivalent conductivity for the mid-frequency (upward pointing triangles) and high-frequency (downward pointing triangles) relaxation peaks. Open symbols refer to $Bi_2SrO_4$ and full symbols refer to $Bi_2Sr_{0.9}Na_{0.1}O_4$. The circles refer to conductivities measured at 1592 Hz, open circles for heating and filled circles for cooling at 100°C per hour.

## Example 1

Five separate samples of $YBa_{2-x}K_xCu_3O_{7-\delta}$ with x = 0.00, 0.05, 0.08, 0.10, 0.15 and 0.20 were prepared by solid state reaction of stoichiometric proportions of $Y_2O_3$, $Ba(No_3)_2$, $KNO_3$ and CuO. The precursors were mixed and ground by an agate mortar and pestle, reacted at 890°C for 15 minutes and air-quenched. The reacted material was reground and sintered at 890°C for 15 minutes and air-quenched. The resultant ceramics exhibited flux expulsion in liquid nitrogen and displayed zero resistance around 90 K for x = 0.05, 0.08 and 0.10 even after the first reaction fire. In contrast, unsubstituted YBCO is typically prepared using $BaCO_3$ together with $Y_2O_3$ and CuO reacted at 930 to 950°C for 6 to 15 hours, reground, die-pressed then sintered at a similar temperature and duration incorporating a slow-cooling step or low temperature anneal. These samples were then annealed for up to one hour in air at various temperatures then either air-quenched onto cold zirconia substrates or quenched in situ into liquid nitrogen. The structure was determined by X-ray diffraction and changes in oxygen stoichiometry by weight change.

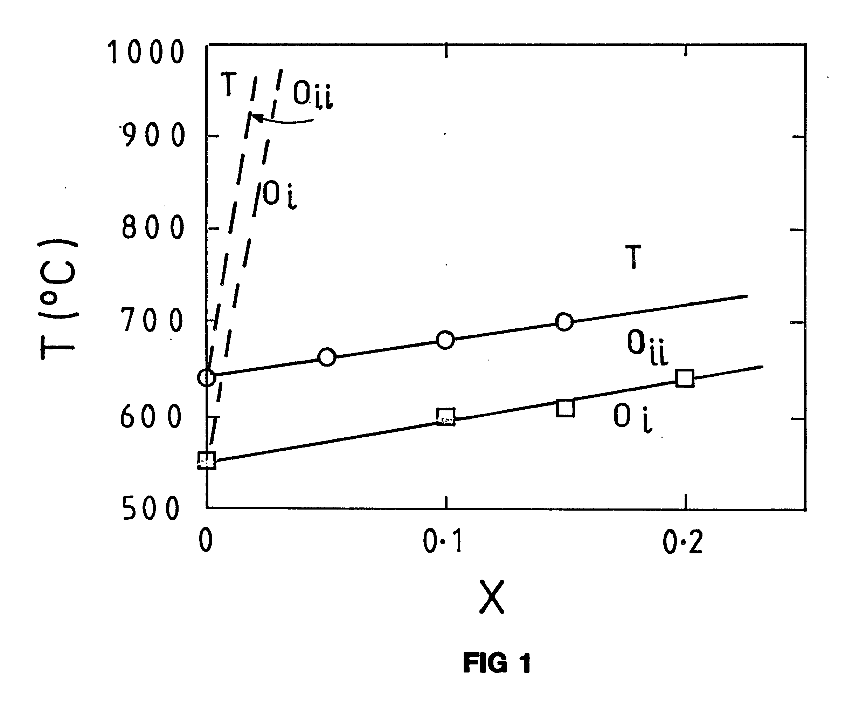

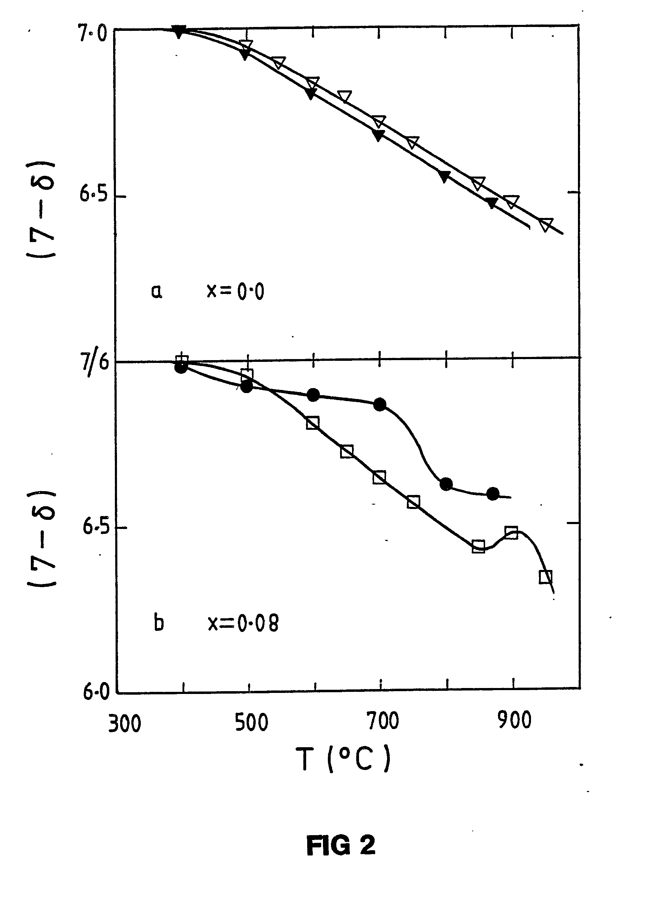

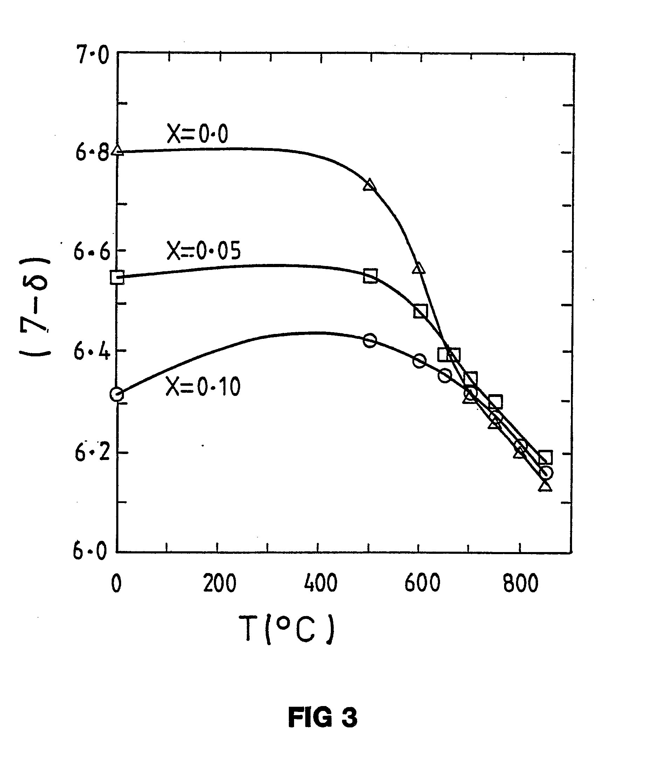

Figure 1 shows the boundaries between tetragonal (T) and the two orthorhombic phases $O_{ii}$ and $O_i$ for air-quenched and liquid-nitrogen-quenched samples. $O_i$ is the phase which exhibits 90 K superconductivity. The difference between air quenching and liquid-nitrogen quenching arises because of the enhanced oxygen mobility. The five to ten second cool-down in the air-quenched samples is sufficiently long to allow significant ingress of oxygen in the potassium substituted samples, but not in the unsubstituted sample. Figure 2 shows the oxygen stoichiometry for air-quenched and liquid nitrogen-quenched samples with x = 0.00 and x = 0.08. It is evident that substituted air-quenched samples reload oxygen rapidly in the short quench time available, whereas the undoped samples do not. Figure 3 shows, for 0.05 < x < 0.20, that the equilibrium oxygen content in substituted samples is less than in the unsubstituted sample and is minimised for $0.10 < x < 0.15$. The retention of superconductivity at about 90 K for these oxygen contents ($\delta > 0.4$) which are well below the limit for 90 K superconductivity in unsubstituted samples ($\delta < 0.2$) confirms that less oxygen is required for superconductivity in the substituted material. Less oxygen is required and it enters the material more rapidly. Moreover, for the same sintering treatment the substituted samples sintered to a more dense ceramic than did the unsubstituted samples. The smaller equilibrium oxygen content means that the thermal expansion anomaly is less and this, coupled with the rapid diffusion rate which reduces the expansion differentials, leads to a much reduced tendency of dense samples to crack.

Example 2

Samples of composition $YBa_{2-x}K_xCu_3O_{7-\delta}$ and $YBa_{2-x}Na_xCu_3O_{7-\delta}$, were prepared by thorough mixing and prereacting as a powder bed in an alumina crucible at $700^\circ$C in order to ensure homogenous mixing in the nitrate melt before decomposition and efflux of oxides of nitrogen. The residue was transferred to a dry box for milling in an atmosphere of dry nitrogen. 10 and 13 mm diameter pellets were pressed in a die then reacted for 15 minutes to $930^\circ$C in a gold crucible with a close fitting lid in order to minimise egress of volatile alkali oxides. The pellets were reground and milled in an atmosphere of dry nitrogen, die-pressed as pellets and sintered for 15 minutes in the gold crucible. The short reaction and sintering times were to ensure minimal loss of alkali consistent with production of XRD phase-pure material. Typically, one would demonstrate successful atomic substitution by showing a progressive displacement of the structural lattice parameters with increased alkali content. In the present case lattice parameters do not appear to shift. One sees only a progressive relative change in some x-ray reflection intensities. Conditions were arranged to ensure more or less the same density (and hence porosity) for all samples prepared for comparison (85-87% of theoretical density).

Cube shaped samples of 2 mm dimensions were cut using a diamond wire saw. These were investigated in thermal gravimetric analysis (TGA) equipment by raising quickly to $800^\circ$C in nitrogen, then in flowing gas with 1% $O_2$ in $N_2$ the temperature was stepped down in steps of $50^\circ$C. The oven plus sample holder had a response time of 20 to 25 seconds and the transient increase in weight as oxygen was absorbed by the sample was recorded down to equilibrium at about $350^\circ$C. The process·was repeated in 21% $O_2$ (air) then 100% $O_2$. The oxygen stoichiometry was determined before the TGA measurements from the pellet residue and after TGA from the TGA cube sample.

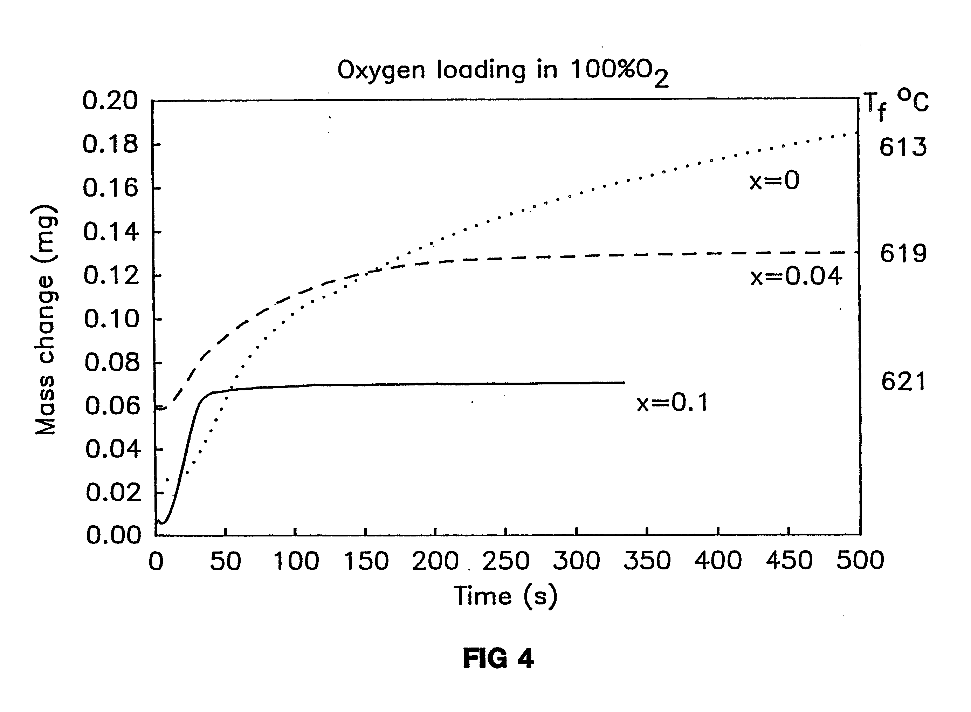

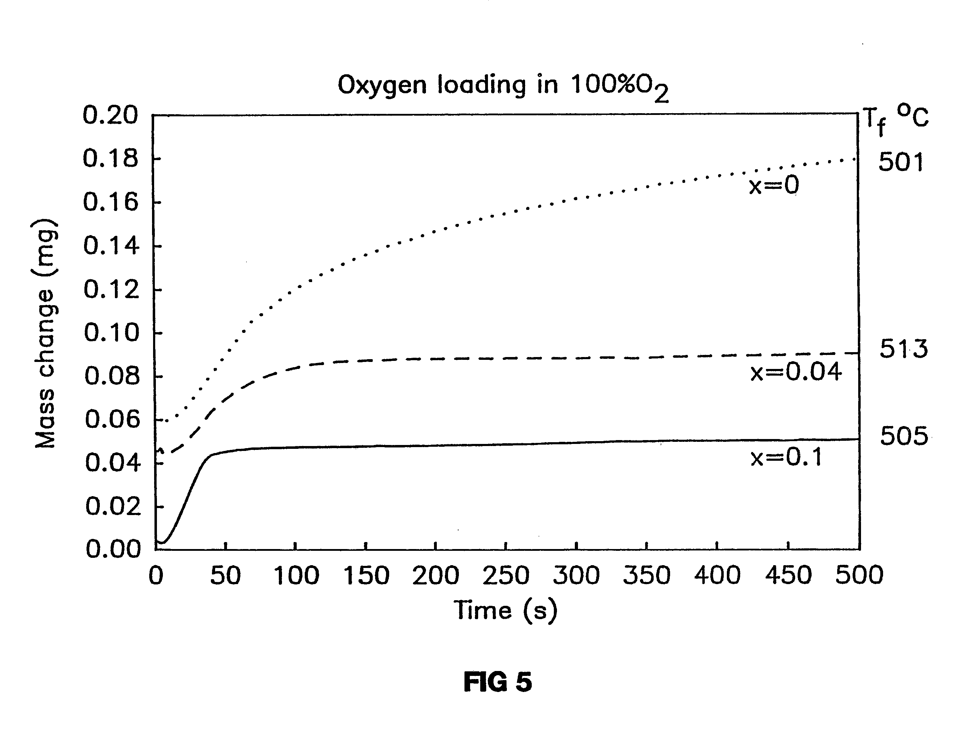

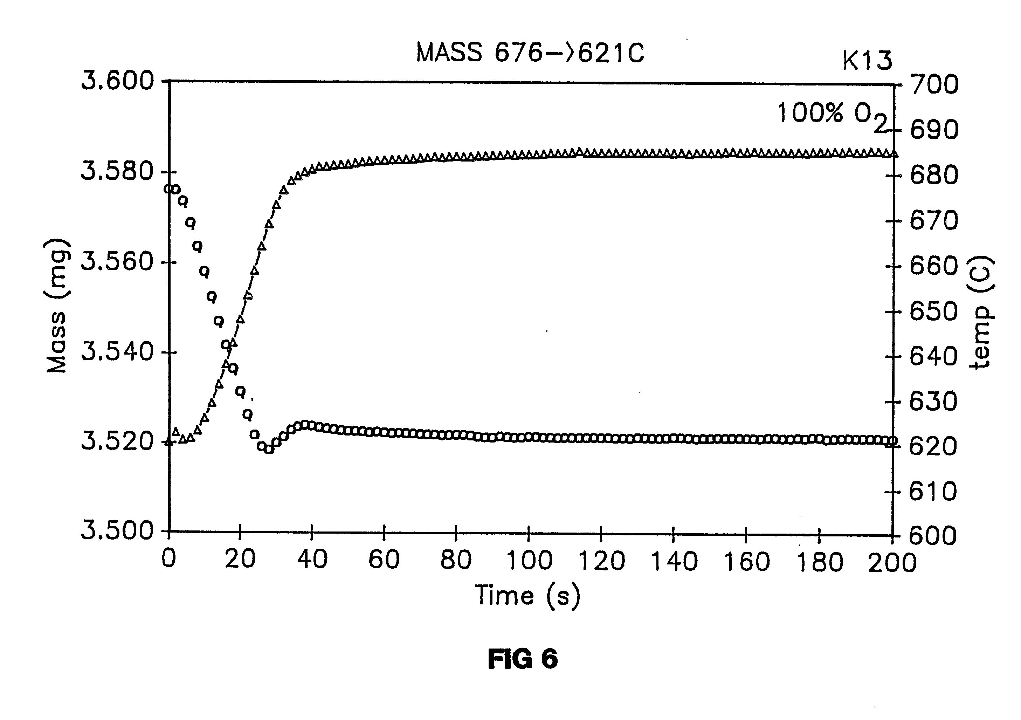

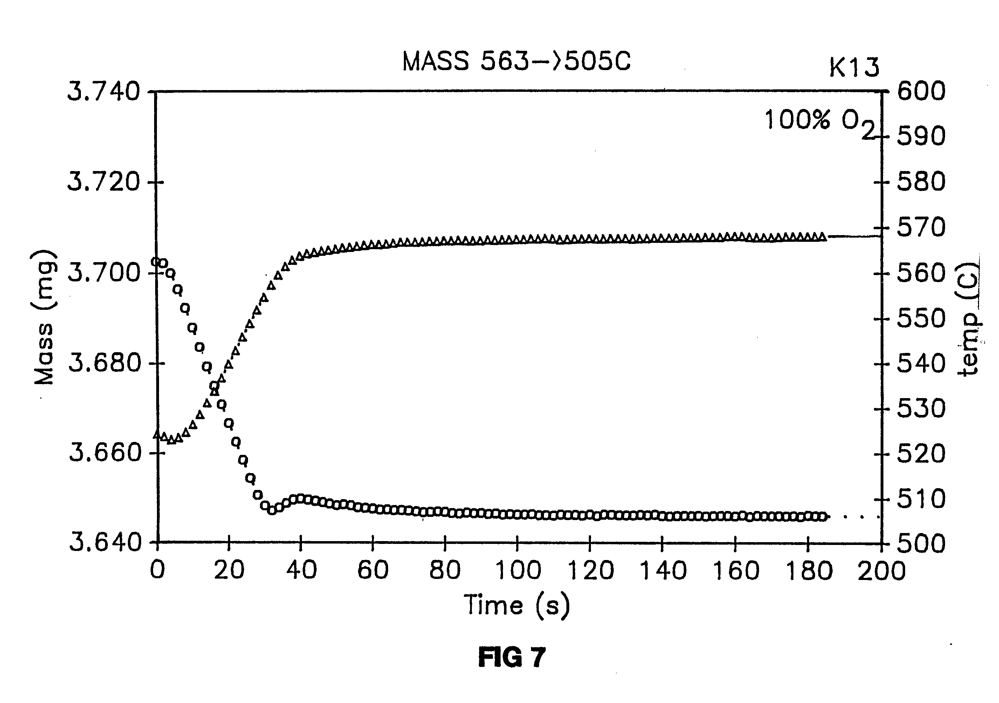

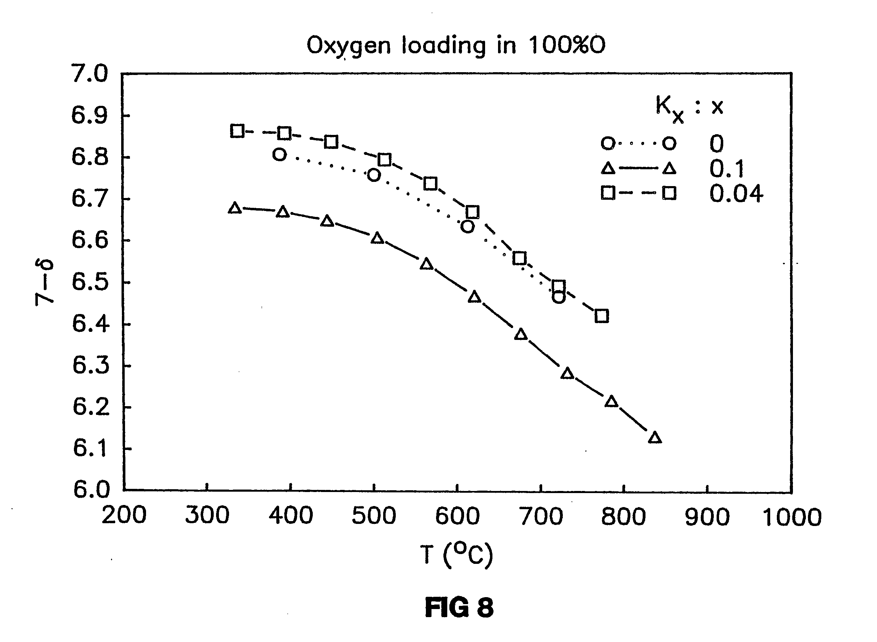

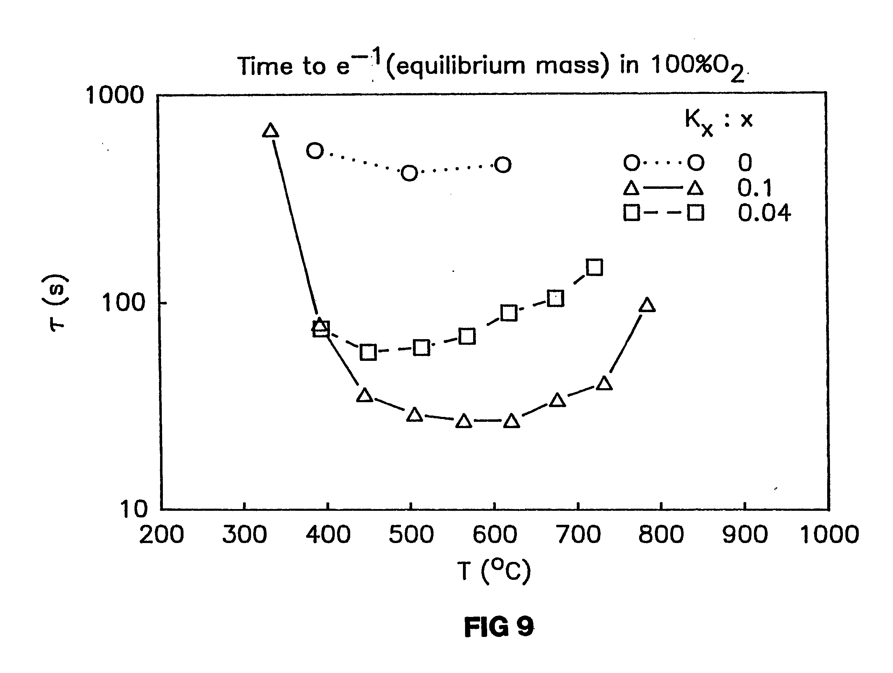

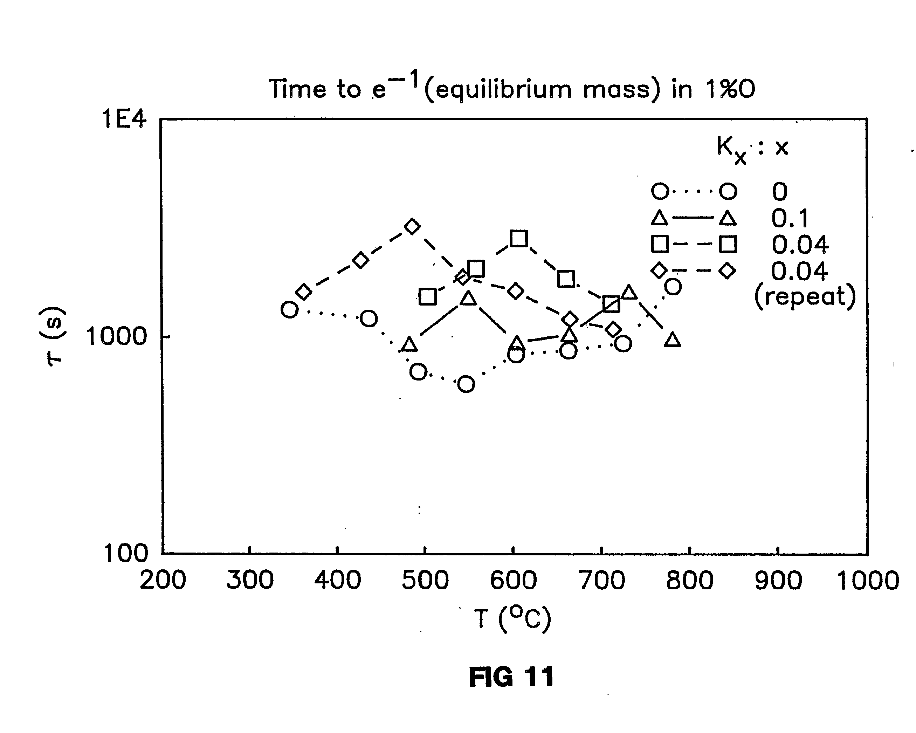

Figs 4 and 5 show the transient mass change for K-substituted samples with $x = 0$, 0.04 and 0.1 as determined before the full cycle of TGA measurements. These were obtained after temperature decrements to~$602^\circ$C and $505^\circ$C respectively. Evidently the transient response becomes much faster as the potassium content increases. It was not possible to determine the response time at the $x = 0.1$ level as the response is limited by the oven response time shown in Figs. 6 and 7 for the same transients. The sample is seen to load as quickly as the furnace temperature changes. For these temperatures it can only be estimated that the true response time is less than~1/5 X the oven response time of 20-25 secs. Fig. 8 shows the equilibrium oxygen loading curves obtained from the total mass changes occurring at each temperature. The $x = 0.1$ curve is displaced by a constant -0.15 below the other two curves due to the fact that during the initial heat to $800^\circ$C in $N_2$ gas a partial loss of K occurred. Analysis beforehand indicated x~0.1, while after, x~0.03. Allowing for this initial mass loss sees the three loading curves roughly coinciding. Figs 9-11 show the time elapsed for relaxation to 1/e of the total mass change in 100% $O_2$, 21% $O_2$ and 1% $O_2$ for each substitution level, as plotted in Figs 4 and 5 and many others like them. Bearing in mind that for $x = 0.1$ the actual relaxation time may be 1/5 of the relaxation time shown in the figure, or less, it is noted that substitution has increased the loading rate by a factor of more than 100. The curves show distinct minima occurring at around 500 to $550^\circ$C where the rate is fastest. At 21% $O_2$ the enhancement in loading rate is not as great while at 1% $O_2$ there is little difference in loading rate whatever the substitution level.

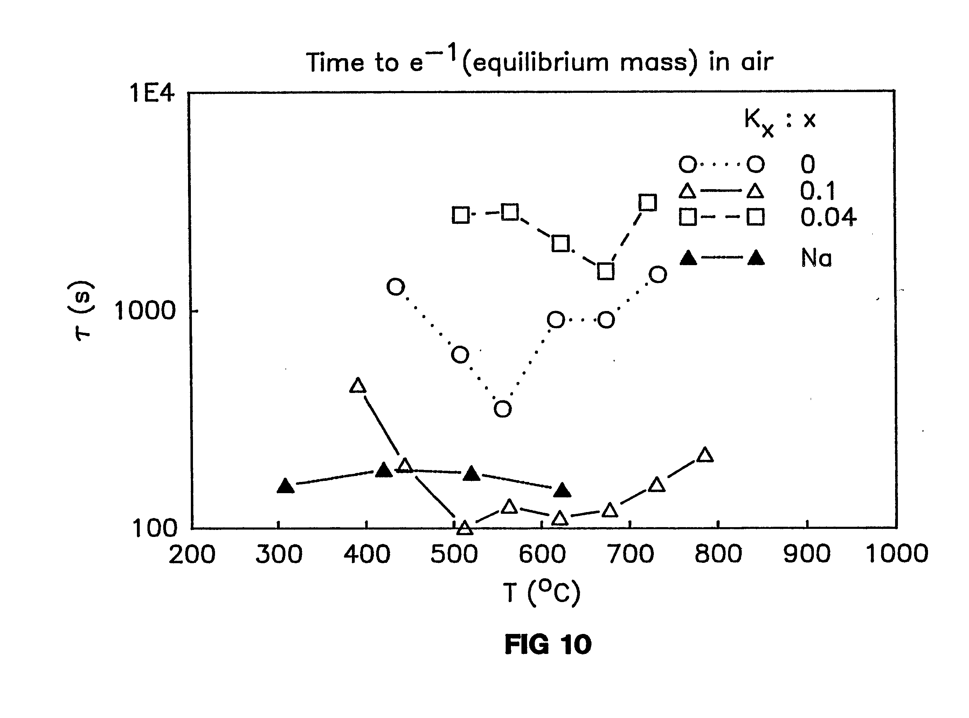

Also included in Fig. 10 is the data, shown by solid triangles of Na-substituted $x = 0.1$ YBCO obtained at 12% $O_2$ in $N_2$. The loading rate is not much slower than for K-substituted $x = 0.1$ material. However, allowance must be made for the fact that the oxygen partial pressure is not the same and the density of the Na-substituted material is rather higher (90% of theoretical density). Both of these effects, and particularly the latter will slow the oxygen loading rate. It may be concluded that sodium substitution probably has a larger effect in enhancing oxygen loading rate than does potassium substitution.

Example 3

A sample composition $YBa_{1.9}Na_{0.1}Cu_3O_{7-\delta}$ was prepared as described in example 2. After the first 15 minute reaction the material was reground and die-pressed as a bar with dimensions 3 mm x 3 mm and 45 mm and sintered for 30 minutes in a sealed gold tube. XRD measurements indicated essentially phase-pure material.

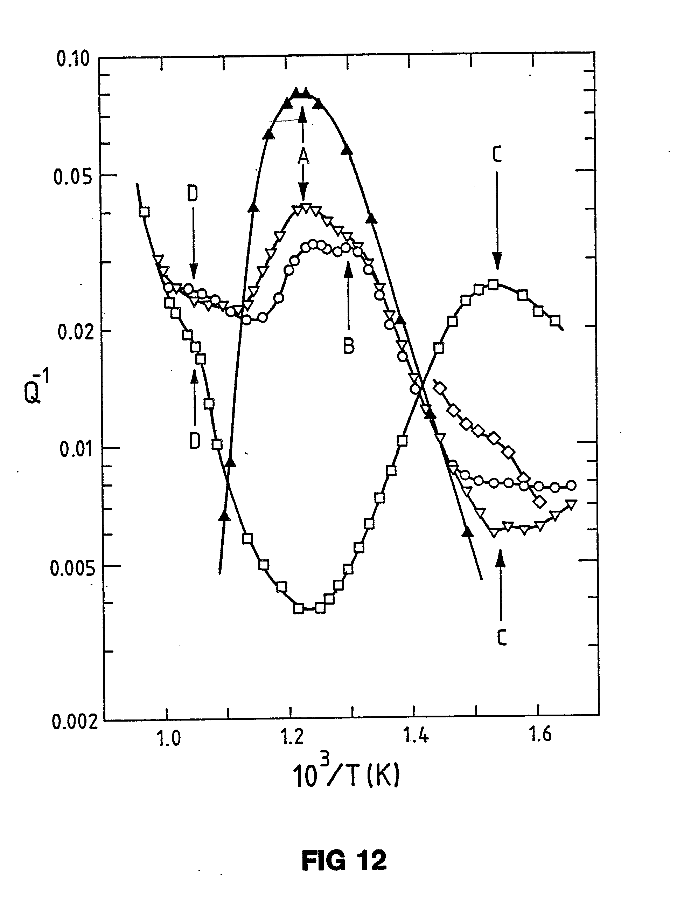

The sintered bar was trimmed precisely in length to resonate mechanically at 40 kHz in the longitudinal mode, then, using sauericon ceramic cement, the bar was glued to a 40 kHz composite oscillator, comprising quartz drive and gauge crystals and a fused quartz spacer red. The Youngs modulus and mechanical damping were measured as a function of temperature in various atmospheres with different partial pressures. It has been shown (can Tallon, Schuitema and Tapp, Applied Physics Letters 52, 507 (1988)) that the mechanical damping at 40 kHz is dominated by a peak at 544°C (marked A in Fig. 12) which arises from the hopping of oxygen atoms within the basal plane from the chain sites to the vacant sites. From this, a diffusion coefficient of $2.9 \times 10^{-11}$ cm$^2$ sec$^{-1}$ may be deduced. The mechanical damping of the Na-substituted sample, shown in Fig. 12, has an additional peak (marked B) occurring at 493°C indicating the presence of sites in the lattice where the hopping rate is faster. For comparison, Fig. 12 also shows the mechanical damping curve for the unsubstituted material which shows the absence of the subsidiary peak.

The presence of the peak confirms the substitution of Na into the $YBa_2Cu_3O_7$ lattice. Oxygen hopping rates in the substituted and unsubstituted materials may be compared by noting that the hopping period or time, t is thermally activated, i.e.

$t = t_0 \exp(h/kt)$

The mechanical damping, $Q^{-1}$ arising from oxygen hopping, follows a Debye relaxation described by

$Q^{-1} = Q_0^{-1} \ Wt/(1 + W^2 t^2)$

where W is the angular driving frequency $2\pi \times 40$ kHz. From the shape of the damping curve on the low temperature side of the peak for unsubstituted $YBa_2Cu_3O_7$ h is found to be 1.07 eV and $t_0 = 1.0 \times 10^{-12}$ sec. This now allows the hopping period at the temperature of the subsidiary peak to be calculated for direct comparison with the hopping period from the subsidiary peak. The two hopping times at a temperature of 493°C are

$t = 4.0 \times 10^{-6}$ sec (unsubstituted)

$t' = 1.1 \times 10^{-5}$ sec (Na-substituted, additional peak)

This is a 3-fold increase in hopping rate showing that the effect of partial alkali-substitution into $YBa_2Cu_3O_{7-\delta}$ is to introduce oxygen sites, presumably adjacent to the alkali atom, where the hopping rate and hence the overall diffusion rate is faster. In addition, the substitution is likely to increase the oxygen vacancy concentration, thus increasing the diffusion correlation coefficient thus further increasing the diffusion rate. It may be that oxygen vacancies are introduced above and below the basal plane, i.e. in the barium oxide planes where the alkali substitutes. This would covert the diffusion geometry from 2-dimensions to 3-dimensions resulting in a further increase in diffusion coefficient. The increase in hopping rate arises from the softer interaction potential between an oxygen and the monovalent alkali atom compared to the potential between an oxygen atom and the divalent barium atom. The softer interaction potential will also arise from the outward relaxation of oxygen-ions away from the alkali atom.

At oxygen partial pressures less than or equal to 0.02 atm, another damping peak (marked C in Fig. 12) becomes evident at 381°C. This corresponds to a 45X increase in hopping rate and may well be the principal mechanism by which the large increases in loading rate and oxygen diffusion referred to in example 2 occur.

In conclusion, the oxygen loading rate is found to maximise between 500 and 550°C and increases by a factor of more than 100 for K-substitution with x=0.1. Specifically, for a 2 mm cube of 87% density, unsubstituted YBCO takes 1000 sec to load at 500°C while K-substituted YBCO with x = 0.1 takes only 8 sec or less. Higher loading rates may be achieved for x>0.1 for Na-substitution and for oxygen partial pressures exceeding 1 atmosphere. Sodium has the additional advantages that it is less volatile at the temperature of preparation; for a given temperature and duration samples sinter to a higher density when Na-substituted and they are less subject to atmospheric attack than are the K-substituted materials.

Example 4

The compounds $Bi_2SrO_4$ and $Bi_2Sr_{0.5}Ca_{0.5}O_4$ were prepared by solid state reaction of stoichiometric proportions of $Bi_2O_3$, $SrCO_3$ and $CaCo_3$ at 770°C for 12 hours. The compounds $Bi_2CaO_4$, prepared at 650°C is known (P Conflant et al, C R Acad. Sc. Paris 279, 457 (1974)) however $Bi_2SrO_4$ and $Bi_2Sr_{0.5}Ca_{0.5}O_4$ as prepared above are new materials with a layered structure and a platy, mica-like morphology. When the precursor materials are rapidly heated $Bi_2SrO_4$ adopts a tetragonal structure with lattice constants a = 4.26A, b = 6.10A and c = 19.3A. When the precursor materials are heated more slowly $Bi_2SrO_4$ adopts the same structure as $Bi_2Sr_{0.5}Ca_{0.5}O_4$, namely a platy hexagonal structure with a 2.76 x superstructure in the basal plane as revealed by electron diffraction. Lattice parameters for these materials are summarised in Table 1. The compound $Bi_2Sr_{0.9}Na_{0.1}O_{4-\delta}$ was prepared by reaction of $Bi_2O_3$, $(Sr(NO_3)_2$ and $NaNO_3$ at 770°C for 2 hours in a gold crucible. This compound adopts the same structure at $Bi_2Sr_{0.5}Ca_{0.5}O_4$ as shown in Table 1.

Table 1

| Lattice parameters for various compounds investigated. | | | | |
|---|---|---|---|---|
| Compound | Comments | Lattice parameters (A) | | |
| | | a | b | c |
| $Bi_2SrO_4$ | Fast heat | 4.26 | 6.10 | 19.3 |
| $Bi_2SrO_4$ | Slow heat | | | |
| | Quenched 770°C | | | 19.207 |
| | Quenched 610°C | | | 19.214 |
| | Quenched 580°C | | | 19.226 |
| $Bi_2Sr_0. Ca_0. O_4$ | | | | 19.06 |
| $Bi_2Sr_0. Na_{0.1}O_4$ | Quenched 770°C | | | 19.203 |

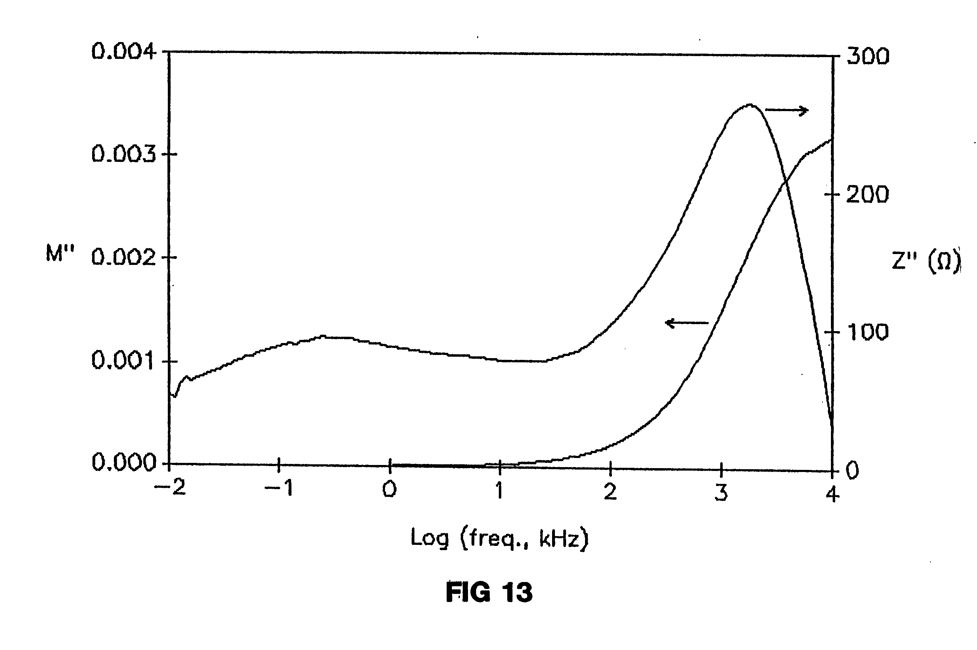

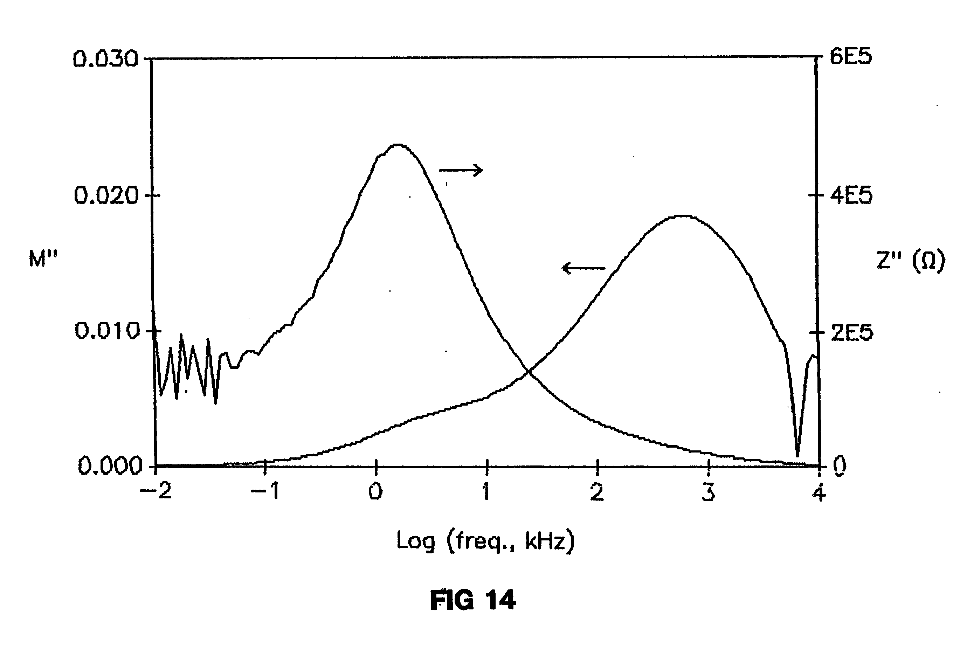

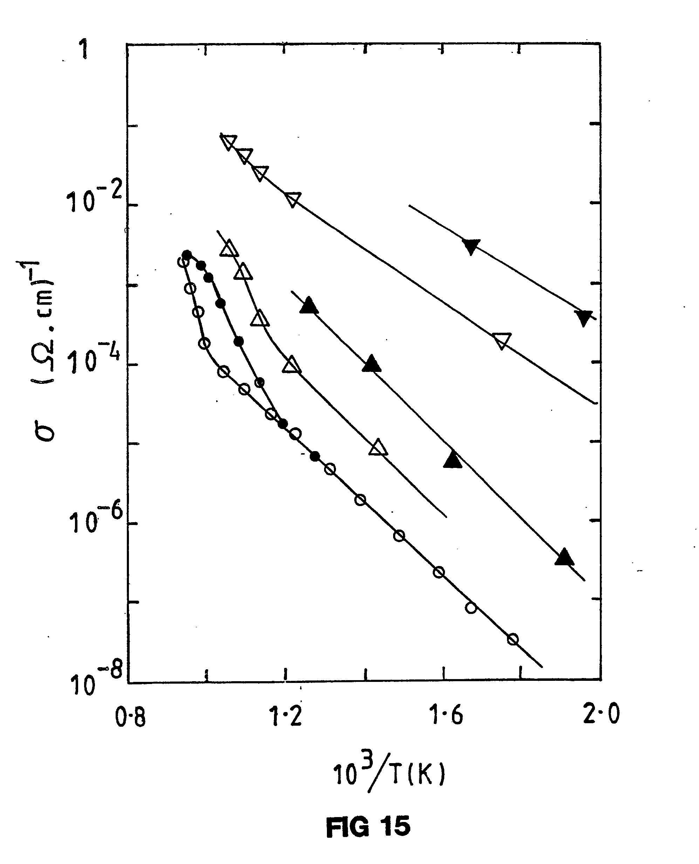

Impedance spectroscopy or $Bi_2SrO_4$ and $Bi_2Sr_{0.9}Na_{0.1}O_4$ exposes three relaxation peaks, a well-broadened low frequency peak shown in Fig. 13 for the alkali substituted material. This relaxation has an equivalent capacitance of about 100 nF which does not change with temperature. This together with the broadening suggests that this relaxation arises from grain boundaries. The mid- and high-frequency relaxations shown in Fig. 14 have equivalent capacitances of 50 to 500 pF which are strongly temperature dependent and these are attributable to two oxygen hopping processes. Fig. 15 shows, as a function of inverse temperature, conductivity calculated from the equivalent resistance for these relaxations (measured from Cole-Cole plots or from the position and magnitude of the peaks). Open triangles refer to $Bi_2SrO_4$, filled triangles refer to $Bi_2Sr_{0.9}Na_{0.1}O_4$. Upward-pointing triangles refer to the mid-frequency relaxation, downward-pointing triangles refer to the high-frequency relaxation. The circles refer to conductance measurements at 1592 Hz using a Wayne-Kerr bridge. The sodium-substitution is seen to increase the equivalent conductivity of the mid-frequency relaxation by 10 times while the conductivity for the high-frequency relaxation is enhanced by 30 times. It is concluded that the hopping rate for both relaxations is enhanced by the alkali-substitution.

Example 5

The compound $Ca_{12}Al_{14}O_{33}$ is known to be of cubic structure having a high oxygen-ion conductivity with a high transference number, i.e. the dominant current carrier at high temperature is the oxygen-ion rather than electrons (Lacerda et al, Nature 332, 525 (1988)). This material is typically prepared by reacting $CaCO_3$ and $Al_2O_3$ at temperatures in the range 1250 to 1350°C for periods of 6 to 15 hours. Although this material is a candidate for alkali substitution both reaction temperature and duration need to be reduced to allow incorporation of the alkali. In reaction $CaCO_3$ and $Al_2O_3$ for 12 hours in stoichiometric proportions for $Ca_{12}Al_{14}O_{33}$ the following phases were observed:
- reacted at 1250°C: 100% $Ca_{12}Al_{14}O_{33}$
- reacted at 1200°C: similar proportions of $Ca_3Al_2O_6$, $Ca_{12}Al_{14}O_{33}$ and $CaAl_2O_4$
- reacted at 1100°C: similar proportions of $Ca_3Al_2O_6$, $CaAl_2O_4$ and unreacted CaO and 10% unreacted $Al_2O_3$
- reacted at 1000°C: unreacted CaO and $Al_2O_3$
It is concluded that 1250°C represents the lowest temperature at which the single phase product may be prepared using $CaCO_3$ in the precursor material. Using $Ca(NO_3)_2$ in the precursor resulted in this boundary being lowered to 1100°C or lower. At 1050°C roughly 80% of the product was the required $Ca_{12}Al_{14}O_{33}$. By including $NaNO_3$ in the precursor material the boundary was lowered still further.
$Ca_{11}NaAl_{14}O_{33-\delta}$ was prepared by stoichiometric reaction of $Ca(NO_3)_2$, $NaNO_3$ and $Al_2O_3$ at 1000°C in a

EP 0 323 178 A2

gold lined alumina crucible, capped to reduce efflux of $Na_2O$ vapour. Cole-Cole plots of impedance data showed a single large semicircle arising from grain boundary capacitance which concealed the bulk oxygen-ion relaxation. This prevented straightforward demonstration of enhanced oxygen-ion mobility but the successful rapid low temperature preparation underscores the utility of the preparation technique.

The foregoing describes the invention including preferred forms and examples thereof. The preparation of alkali-substituted materials other than those specifically exemplified will be within the scope of those skilled in the art in view of the foregoing. The scope of the invention is defined in the following claims.

## Claims

1. A method of enhancing oxygen-ion mobility in a binary, ternary, or higher metal oxide containing as one or more cations any alkali-earth element or elements, comprising preparing said material such that said alkali-earth element(s) is partially or fully substituted by any of the alkali metals Li, Na, K, Rb or Cs.

2. A method of preparing a binary, ternary, or higher metal oxide material containing as one or more cations any alkali-earth element or elements and exhibiting superconductivity comprising preparing said material such that said alkali-earth element(s) is partially or fully substituted by any of the alkali metals Li, Na, K, Rb or Cs.

3. A method of preparing a binary, ternary, or higher metal oxide material containing as one or more cations any alkali earth element or elements and exhibiting superconductivity comprising preparing said material such that said alkali earth element is partially or fully substituted by any of the alkali metals Li, Na, K, Rb, or Cs, and modifying the oxygen stoichoimetry of said material to enhance the superconductivity thereof.

4. A method of preparing a binary, ternary or higher metal oxide material containing as one or more cations any alkali-earth element or elements and exhibiting superconductivity comprising preparing said material such that said alkali earth element(s) is substituted by any of the alkali metals Li, Na, K, Rb or Cs to an extent sufficient to achieve a rate of oxygen diffusion or rate of oxygen exchange with an oxygen containing atmosphere sufficient to enable oxygen exchange or oxygen diffusion into said material to achieve the oxygen stoichiometry in said material requisite for superconductivity at an elevated temperature in a minimum or reduced time.

5. A method of preparing a binary, ternary or higher metal oxide material containing as one or more cations any alkali-earth element(s) and oxhibiting superconductivity, comprising preparing said material such that said alkali earth element(s) is substituted by any of the alkali metals Li, Na, K, Rb or Cs to an extent sufficient to achieve a rate of oxygen diffusion or rate of oxygen exchange with an oxygen containing atmosphere sufficient to enable oxygen exchange or oxygen diffusion into said material to achieve the oxygen stoichiometry in said material requisite for superconductivity at an elevated temperature in a minimum or reduced time, and carrying out said oxygen exchange or oxygen diffusion into said material to achieve said oxygen stoichiometry in a minimum or reduced time.

6. A method of preparing a binary, ternary or higher metal oxide material containing as one or more cations any alkali earth element and exhibiting superconductivity, comprising preparing said material such that said alkali earth element(s) is partially or fully substituted by any of the alkali metals Li, Na, K, Rb or Cs and to at least 96% of theoretical density, and carrying out oxygen exchange or oxygen diffusion into said material to an extent sufficient to achieve the requisite oxygen stoichiometry for superconductivity at an elevated temperature in less than 10 minutes.

7. A method of preparing an electrode, electrolyte, sensor or catalyst material comprising preparing same from a binary, ternary, or higher metal oxide material containing as one or more cations any alkali earth element or elements having high oxygen-ion mobility, including preparing said material such that said alkali earth element is partially or fully substituted by any of the alkali metals Li, Na, K, Rb, or Cs, and as necessary modifying the oxygen stoichoimetry of said material to enhance the oxygen ion mobility thereof.

8. A method according to any one of the preceding claims wherein said metal oxide containing said alkali-earth element(s) and into which said alkali element is substituted is selected from:
$RBa_2Cu_3O_{7-\delta}$    ... (1)
wherein: R is Y, La, Nd, Sm, Eu, Gd, Ho, Er, Lu, Bi or Tl, or any combination thereof;
$Bi_{2+x}(Ca,Sr)_{n+1}Cu_nO_{2n+4+\delta}$    ... (2)
wherein n = 0, 1, 2, 3, ...;
$Tl_{1+x}(Ca,Ba)_{n+1}Cu_nO_{2n+3+\delta}$    ... (3)
wherein n = 0, 1, 2, 3, ...;
$Tl_{2+x}(Ca,Ba)_{n+1}Cu_nO_{2n+4+\delta}$    ... (4)

wherein n = 0, 1, 2, 3, ...; or

$Pb_2Sr_2RCu_3O_{8+\delta}$ ... (5)

wherein: a) in any of formulae (2), (3) and (4):

Bi or Tl may be partially substituted by Tl, Bi, Pb, Sb or R where R is as defined in formula (1);

b) in any of formulae (1), (2), (3), (4) and (5):

the alkali earth elements may alternatively comprise either wholly or in part another alkali earth element, R, Pb or Sb; Cu may be partially substituted by any transition metal; and O may be partially substituted by H, F, N or S; and

c) in formulae (5) R may comprise either wholly or in part any other element R as defined in (1) or any alkali earth element.

9. A method according to either of claims 1 and 7 wherein the said metal oxide material containing said alkali earth element(s) is selected from:

$Bi_2AO_{4+\delta}$ ... (7)

wherein:

Bi may be replaced either wholly or in part by Tl, Pb or Sb;

$AR_{1-x}R'_xO_{3-\delta}$ ... (8)

wherein:

R is as defined for formula (1);

R' may be any other element R as defined in formula (1);

$A_{12}Al_{14}O_{33}$; or ... (9)

$RA_2Ni_3O_{7-\delta}$; ... (10)

wherein in formulae (7), (8), (9) and (10):

A is any alkali earth element or combination thereof.

10. A method according to claim 9 wherein the said metal oxide material containing said alkali earth element(s) is selected from:

$Bi_2Sr_{1-x}Ca_xO_{4+\delta}$ ; ... (11)

$SrCe_{1-x}Yb_xO_{3-\delta}$ ; ... (12)

$Ca_{12}Al_{14}O_{33}$ ; or ... (13)

$YBa_2Ni_3O_{7-\delta}$ . ... (14)

11. A method according to any of the preceding claims wherein said alkali metal is K or Na.

12. A method according to claim 8, wherein said alkali metal substituted metal oxide material is either:

$YBa_{2-x}KCu_3O_{7-\delta}$ wherein $0<x<1$, or

$YBa_{2-x}Na_xCu_3O_{7-\delta}$, where $0<x<0.5$.

13. A method according to any one of claims 1 to 12 wherein the said alkali metal substituted metal oxide material is prepared by solid state reaction of precursor materials in stoichiometric proportions, liquid flux reaction, or vapour phase deposition and reaction.

14. A method according to any one of claims 1 to 12 wherein said alkali metal substituted metal oxide material is prepared by firstly preparing said alkali earth element containing material and then carrying out said alkali metal substitution by electrochemical insertion, ion insertion, or diffusion from a bulk source.

15. A method according to claim 13, wherein any or all of the cations in the material are introduced in the nitrate or hydroxide forms.

16. A method according to claim 15 wherein the precursor materials are mixed in aqeuous solution, and sprayed as a mist through heated reaction zone for rapid reaction of the discrete droplets.

17. A method according to claim 16 wherein the reacted particles are oxygen-loaded or unloaded by annealling in an oxygen containing atmosphere while still air-borne.

18. A binary, ternary, or higher metal oxide material containing as one or more cations any alkali-earth element or elements, wherein said alkali-earth element(s) is partially or fully substituted by any of the alkali metals Li, Na, K, Rb or Cs.

19. A binary, ternary or higher metal oxide material containing as one or more cations any alkali-earth element or elements and exhibiting superconductivity wherein said alkali earth element(s) is substituted by any of the alkali metals Li, Na, K, Rb or Cs to an extent sufficient to achieve a rate of oxygen diffusion or rate of oxygen exchange with an oxygen containing atmosphere for said material sufficient to enable oxygen exchange or oxygen diffusion into said material to achieve the oxygen stoichiometry in said material requisite for superconductivity at an elevated temperature in a minimum or reduced time.

20. A binary, ternary or higher metal oxide material containing as one or more cations any alkali earth element and exhibiting superconductivity, wherein said alkali earth element(s) is partially or fully substituted by any of the alkali metals Li, Na, K, Rb or Cs, the density of the material is at least 96% of theoretical

12

density, and the oxygen stoichiometry of the material has been modified by carrying out oxygen exchange or oxygen diffusion into said material to an extent sufficient to achieve the requisite oxygen stoichiometry for superconductivity at an elevated temperature in less than 10 minutes.

21. An electrode, electrolyte, sensor or catalyst material comprising a binary, ternary, or higher metal oxide material containing as one or more cations any alkali earth element or elements having high oxygen-ion mobility, wherein said alkali earth element is partially or fully substituted by any of the alkali metals Li, Na, K, Rb, or Cs.

22. The materials:

$RBa_2Cu_3O_{7-\delta}$    ... (1)

wherein: R is Y, La, Nd, Sm, Eu, Gd, Ho, Er, Lu, Bi or Tl, or any combination thereof;

$Bi_{2+x}(Ca,Sr)_{n+1}Cu_nO_{2n+4+\delta}$    ... (2)

wherein n = 0, 1, 2, 3, ....

$Tl_{1+x}(Ca,Ba)_{n+1}Cu_nO_{2n+3+\delta}$    ... (3)

wherein n = 0, 1, 2, 3, ....

$Tl_{2+x}(Ca,Ba)_{n+1}Cu_nO_{2n+4+\delta}$    ... (4)

wherein n = 0, 1, 2, 3, ....

$Pb_2Sr_2RCu_3O_{8+\delta}$    ... (5)

wherein: a) in any of formulae (2), (3) and (4):

Bi or Tl may be partially substituted by Tl, Bi, Pb, Sb or R where R is as defined in formula (1);

b) in any of formulae (1), (2), (3), (4) and (5):

the alkali earth elements may alternatively comprise either wholly or in part another alkali earth element, R, Pb or Sb; Cu may be partially substituted by any transition metal; and O may be partially substituted by H, F, N or S; and

c) in formulae (5) R may comprise either wholly or in part any other element R as defined in (1) or any alkali earth element;

wherein the alkali earth element cations in said mateial are partially or fully substituted by any of Li, Na, K, Rb or Cs.

23. The metal oxide material defined by

$YBa_{2-x}X_xCu_3O_{7-\delta}$

wherein 0 < x < 1 and X is Na or K.

24. The metal oxide materials

$Bi_2AO_{4+\delta}$    ... (7)

wherein:

Bi may be replaced either wholly or in part by Tl, Pb or Sb;

$Ar_{1-x}R'_xO_{3-\delta}$    ... (8)

wherein:

R is as defined for formula (1);

R' may be an other element R as defined in formula (1);

$A_{12}Al_{14}O_{33}$; or    ... (9)

$RA_2Ni_3O_{7-\delta}$;    ... (10)

wherein: in formulas (7), (8), (9) and (10): A is any alkali earth element or combination thereof partially or fully substituted by any of Li, Na, K, Rb or Cs.

FIG 1

EP 0 323 178 A2

FIG 2

FIG 3

Oxygen loading in 100%$O_2$

FIG 4

Oxygen loading in 100%$O_2$

FIG 5

EP 0 323 178 A2

**FIG 6**

EP 0 323 178 A2

**FIG 7**

MASS 563→505C

K13

100% O2

EP 0 323 178 A2

**FIG 8**

EP 0 323 178 A2

Time to $e^{-1}$(equilibrium mass) in 100%$O_2$

$K_x$ : x

O····O    0
△——△    0.1
□– –□    0.04

$\tau$ (s)

T ($^{o}$C)

FIG 9

EP 0 323 178 A2

**FIG 10**

EP 0 323 178 A2

FIG 11

**FIG 12**

**FIG 13**

EP 0 323 178 A2

**FIG 14**

EP 0 323 178 A2

FIG 15